(19) Europäisches Patentamt
European Patent Office
Office européen des brevets

(11) **EP 3 681 303 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **18773107.0**

(22) Anmeldetag: **11.09.2018**

(51) Internationale Patentklassifikation (IPC):
*A23G 1/00* (2006.01)    *A23G 1/12* (2006.01)
*A23G 1/16* (2006.01)    *A23G 7/00* (2006.01)
*A23G 7/02* (2006.01)

(52) Gemeinsame Patentklassifikation (CPC):
**A23G 1/0036; A23G 1/125; A23G 1/16; A23G 7/0093; A23G 7/02**

(86) Internationale Anmeldenummer:
**PCT/EP2018/074371**

(87) Internationale Veröffentlichungsnummer:
**WO 2019/048686 (14.03.2019 Gazette 2019/11)**

(54) **VERFAHREN UND VORRICHTUNG ZUR HERSTELLUNG EINES KAKAOPRODUKTS ODER SCHOKOLADENPRODUKTS**

METHOD AND DEVICE FOR PRODUCING A COCOA PRODUCT OR CHOCOLATE PRODUCT

PROCÉDÉ ET DISPOSITIF DE FABRICATION D'UN PRODUIT DE CACAO OU DE CHOCOLAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2017 DE 102017120912**

(43) Veröffentlichungstag der Anmeldung:
**22.07.2020 Patentblatt 2020/30**

(73) Patentinhaber: **Rinsch Edelstahlverarbeitung GmbH**
**47906 Kempen (DE)**

(72) Erfinder: **RINSCH, Peter**
**47918 Tönisvorst (DE)**

(74) Vertreter: **karo IP**
**karo IP Patentanwälte**
**Kahlhöfer Rößler Kreuels PartG mbB**
**Platz der Ideen 2**
**40476 Düsseldorf (DE)**

(56) Entgegenhaltungen:
**EP-A1- 0 619 076**    **EP-A1- 0 632 961**
**EP-A1- 2 351 490**    **US-A1- 2007 202 241**
**US-A1- 2008 220 146**

**Beschreibung**

Die Erfindung betrifft ein Verfahren zur Herstellung eines Schokoladenprodukts und eine Vorrichtung zur Herstellung eines Kakaoprodukts oder Schokoladenprodukts.

Zur Herstellung von Kakao- oder Schokoladenprodukten ist es bekannt, die Zutaten nach dem Zusammengeben zu conchieren. Dabei handelt es sich um einen Prozess, bei dem einer herzustellenden bzw. zu bearbeitenden Kakao- oder Schokoladenmasse insbesondere Feuchtigkeit entzogen wird. Dazu wird die Masse in einer entsprechenden Conchiermaschine unter Entstehung von Reibungswärme gerührt, wodurch die Masse insbesondere als eine Paste vorliegen kann. Beim Rühren kann Wasser aus der Masse verdunsten. Durch das Conchieren kann dem Produkt insbesondere einen schmelzenden Charakter erhalten. Auch können Bitterstoffe beim Conchieren aus der Masse zumindest teilweise entfernt werden, so dass durch das Conchieren auch der Geschmack des Produkts verbessert werden kann. Insbesondere können unerwünschte Stoffe wie Acetalaldehyd, Aceton, i-Butanol, Ethanol, i-Propanol, Essigsäureesther, Essigsäure, i-Pentanal, Methanol und/oder Diacethyl durch das Conchieren aus der Masse entfernt werden. Beim Conchieren können sich insbesondere Agglomerate der Masse auflösen. Dispergierte Zucker- und Kakaopartikel können im frei werdenden Fett homogenisiert werden.

Die US 2007/202241 A1 offenbart ein Verfahren für die Herstellung eines Schokoladenüberzuges, wobei die Verwendung eines U-förmigen Troges einer Conche vorgeschlagen wird. Weiter wird dort ausgeführt, dass am Ende des Conschierens die Masse gekühlt wird, nämlich einerseits über einen Wassermantel des Troges und zudem durch (optionales) Einblasen von Umgebungsluft.

Das Conchieren nach bekannten Verfahren ist oft sehr zeitaufwendig und dauert regelmäßig 20 Stunden oder länger. Ein derart langes Conchieren ist insbesondere auch aus energetischen Aspekten ineffizient.

Hiervon ausgehend ist es Aufgabe der hier vorliegenden Erfindung, die im Zusammenhang mit dem Stand der Technik geschilderten technischen Probleme zu lösen bzw. zumindest zu verringern. Es sollen insbesondere ein Verfahren und eine Vorrichtung zur Herstellung eines Kakao- oder Schokoladenprodukts vorgestellt werden, mit denen ein Produkt gleicher Qualität in kürzerer Zeit erhalten werden kann.

Diese Aufgabe wird gelöst mit einem Verfahren und mit einer Vorrichtung gemäß den Merkmalen der unabhängigen Patentansprüche. Weitere vorteilhafte Ausgestaltungen des Verfahrens und der Vorrichtung sind in den abhängigen Patentansprüchen angegeben.

Hierzu trägt ein Verfahren zur Herstellung eines Kakaoproduktes oder Schokoladenprodukts vorgestellt, das zumindest die folgenden Verfahrensschritte umfasst:

a) Bereitstellen einer zu conchierenden Masse,
b) Conchieren bereitgestellten Masse,
c) Zugeben eines Kühlmittels zu der Masse während des Conchierens,

wobei das Kühlmittel zumindest einen festen Stoff mit einer Temperatur unterhalb von - 50 °C umfasst.

Unter einem Kakaoprodukt oder Schokoladenprodukt ist hier insbesondere jedes mit Kakao gebildete Lebensmittel zu verstehen, das zumindest bei Raumtemperatur im festen Zustand vorliegt. Kakaoprodukt oder Schokoladenprodukt werden nachfolgend auch allgemein als Produkt bezeichnet.

Das Produkt kann insbesondere aus Ausgangsstoffen wie Kakao (insbesondere als Kakaobohnen, Kakaopulver und/oder Kakaobutter) sowie Zucker, Milch (insbesondere in flüssiger Form und/oder als Milchpulver), Butter, Lecithin und/oder Öl erhalten werden. Die Ausgangsstoffe können auch als Zutaten bezeichnet werden. Die Herstellung des Produkts kann verschiedene weitere Verfahrensprozesse wie beispielsweise ein Vermischen von Zutaten, ein Rühren, ein Kneten und/oder ein Walzen umfassen. Das beschriebene Verfahren ist insbesondere auf das Conchieren gerichtet, dem insbesondere mehrere Verfahrensprozesse vorausgehen können.

In Schritt a) kann die zu conchierende Masse insbesondere dadurch bereitgestellt werden, dass alle Verfahrensprozesse vom Bereitstellen der einzelnen Zutaten bis zum letzten vor dem Conchieren durchzuführenden Verfahrensprozess (der beispielsweise ein Walzen sein kann) als Teil des Schritts a) durchgeführt werden. Es ist aber auch möglich, dass in Schritt a) ein Zwischenprodukt bereitgestellt wird und dass nur die mit diesem Zwischenprodukt vor dem Conchieren durchzuführenden Verfahrensprozesse als Teil von Schritt a) des beschriebenen Verfahrens durchgeführt werden. Es ist insbesondere auch möglich, dass Schritt a) lediglich darin besteht, eine außerhalb des beschriebenen Verfahrens erhaltene Masse bereitzustellen, die ohne weitere Behandlung conchiert werden kann. Die zu conchierende Masse ist bevorzugt zumindest teilweise fest bzw. erhärtet.

In Schritt b) des beschriebenen Verfahrens erfolgt das Conchieren der Masse. Während des Conchierens kann die Masse umgewälzt werden, wobei sie insbesondere durch Entstehen von Reibungswärme (zumindest überwiegend oder gar vollständig) aufgeschmolzen wird. Vorzugsweise erfolgt das Conchieren in Schritt b) mit einer Drehzahl im Bereich von 1500 U/min [Umdrehungen pro Minute] bis 2000 U/min, insbesondere von 1800 U/min. Vorzugsweise am Ende des Conchierens wird die Masse abgekühlt und/oder teilweise verfestigt. Das kann bei dem beschriebenen Verfahren insbesondere durch Zugabe von Kühlmittel gemäß Schritt c) erfolgen.

In Schritt c) des beschriebenen Verfahrens wird während der Durchführung von Schritt b) ein Kühlmittel zu der Masse zugegeben. Die Zugabe des Kühlmittels erfolgt dabei an zumindest einem Zeitpunkt von Schritt b). Es ist auch möglich, dass die Zugabe des Kühlmittels kontinuierlich über einen Zeitabschnitt erfolgt, der zumindest einem Teil der Dauer des Schritts b) entspricht. Die Zugabe des Kühlmittels kann dabei zu einem oder mehreren beliebigen Zeitpunkten oder über einen oder mehrere beliebige Zeitabschnitte des Schritts b) erfolgen. Es ist auch möglich, dass die Zugabe des Kühlmittels kontinuierlich während der gesamten Dauer von Schritt b) erfolgt. Es ist bevorzugt, dass die Zugabe des Kühlmittels am Ende des Conchierens gemäß Schritt b) erfolgt. Die Zugabe des Kühlmittels erfolgt direkt in die Masse. Das Kühlmittel wird gemeinsam mit bzw. in der Masse erwärmt. So kann ein direkter bzw. unmittelbarer Wärmeaustausch zwischen Kühlmittel und der Masse während des Conchierens erfolgen.

Es hat sich überraschender Weise gezeigt, dass durch Zugabe des Kühlmittels während des Conchierens die Dauer des Conchierens erheblich reduziert werden kann, ohne dass die Qualität des erhaltenen Produkts verschlechtert würde. So konnte in einem Versuch mit dem beschriebenen Verfahren bei einer Conchierdauer von 8 Stunden ein Schokoladenprodukt erhalten werden, das von Testpersonen als weitgehend gleichwertig zu einem Vergleichsprodukt bewertet wurde, welches mit einem konventionellen Conchierverfahren bei einer deutlich längeren Conchierdauer erhalten wurde.

Das Kühlmittel kann beim Conchieren mit der Masse vermischt werden. Dass das Kühlmittel mit der Masse vermischt wird, bedeutet insbesondere, dass das Kühlmittel unmittelbar mit der Masse in Kontakt kommt bzw. in der Masse aufgenommen und/oder von der Masse umgeben wird. Dabei ist das Kühlmittel insbesondere nicht etwa durch eine wärmeleitende Wandung von der Masse getrennt, wie dies beispielsweise der Fall wäre, wenn das Kühlmittel durch Kühlleitungen getrennt verlaufen würde, mit denen die Masse in Kontakt kommt. Dadurch, dass das Kühlmittel mit der Masse vermischt wird, kann die Masse besonders gut Wärme an das Kühlmittel abgeben und damit besonders schnell abkühlen.

Das Kühlmittel umfasst zumindest einen festen Stoff mit einer Temperatur unterhalb von - 50 °C [Grad Celsius]. Das Kühlmittel ist vorzugsweise ein kryogenes Mittel wie beispielsweise ein verfestigtes Gas. Das verfestigte Gas kann bei Zugabe zu der Masse verdampfen und insbesondere sublimieren. Der entstandene Dampf kann (wenigstens teilweise, bevorzugt überwiegend oder gar (nahezu) vollständig) aus der Masse austreten, so dass keine unerwünschten Rückstände des Kühlmittels in der Masse verbleiben. Selbstverständlich sollte das Kühlmittel derart ausgewählt sein, dass es zu keiner potentiell gesundheitsschädlichen Kontamination der Masse kommt, wenn das Produkt zum Verzehr geeignet sein soll.

Insbesondere aus den genannten Gründen ist die Ausführungsform des Verfahrens bevorzugt, in der das Kühlmittel zumindest festes Kohlendioxid [$CO_2$] umfasst. Dabei ist es bevorzugt, dass das Kühlmittel ausschließlich festes Kohlendioxid umfasst. Das feste Kohlendioxid, das auch als Trockeneis bezeichnet werden kann, liegt vorzugsweise in einer solchen Form vor, dass das feste Kohlendioxid dosiert der Masse zugegeben werden kann und/oder dass ein Wärmeaustausch zwischen dem festen Kohlendioxid und der Masse besonders gut erfolgen kann. Das ist insbesondere der Fall, wenn das feste Kohlendioxid mit einem hohen Zerteilungsgrad, also mit einer großen Oberfläche, vorliegt. Das feste Kohlendioxid kann insbesondere als Schnee und/oder als Granulat vorliegen.

Durch Zugabe des festen Kohlendioxids zu der Masse kann das Kohlendioxid insbesondere sublimieren. Dabei können insbesondere Gasblasen gebildet werden, die in der Masse aufsteigen. Durch Bildung der Gasblasen kann ein besonders guter Wärmeaustausch zwischen der Masse und dem Kohlendioxid als Kühlmittel erfolgen. Durch diesen Wärmeaustausch kann eine besonders hohe Kühlrate erreicht werden. Es ist bevorzugt, dass das feste Kohlendioxid derart zugegeben wird, dass eine Kühlrate von mindestens 1 °C/min [Grad Celsius pro Minute], insbesondere von mindestens 1,4 °C/min, erreicht wird. Die Gasblasen können zudem für eine besonders gute Durchmischung der Masse sorgen. Weiter können die Gasblasen das (schnelle und/oder vollständigere) Austreiben von unerwünschten Stoffen aus der Masse begünstigen.

Das Kühlmittel kann in Schritt c) zu einer Mehrzahl von Zeitpunkten während des Conchierens gemäß Schritt b) zugegeben werden. Es hat sich gezeigt, dass eine besonders effiziente Kühlung der Masse erreicht werden kann, wenn die Zugabe in vorgegebenen bzw. regelmäßigen Abständen, z. B. in einem Bereich von 1 bis 5 Minuten, insbesondere von 3 Minuten, erfolgt.

Das Kühlmittel kann in Schritt c) derart zu der Masse zugegeben werden, dass die Masse auf eine Temperatur im Bereich von 35 °C bis 52 °C, insbesondere im Bereich von 42 °C bis 47 °C [Grad Celsius] abgekühlt wird. Die Masse kann während des Conchierens und vor Zugabe des Kühlmittels eine Temperatur von beispielsweise 60 °C bis 80 °C [Grad Celsius] erreichen. Insbesondere ausgehend von einer derartigen (maximalen) Temperatur kann die Masse durch Zugabe des Kühlmittels gemäß Schritt b) gekühlt werden.

Die Kühlwirkung des Kühlmittels kann insbesondere davon abhängig eingestellt sein, wie viel Kühlmittel wann mit welcher Geschwindigkeit (d. h. mit welcher Zugaberate) in welcher Form (d. h. insbesondere mit welchem Zerteilungsgrad) zugegeben wird. Je nach Wahl dieser Parameter kann die Masse von einer bestimmten Ausgangstemperatur vor Zugabe des Kühlmittels mit einem entsprechenden zeitlichen Verlauf der Temperatur auf eine entsprechende Endtemperatur gekühlt werden. Insbesondere kann auch die Dauer zwischen Zugabe des Kühlmittels und Erreichen der Endtemperatur von den genannten Parametern abhängen. Die Endtemperatur liegt bevorzugt bei 42 °C bis 47 °C [Grad Celsius]. Durch Abkühlen der Masse auf diese (minimale) Temperatur kann der Conchierprozess insbesondere beendet werden. Es hat sich gezeigt, dass ein qualitativ besonders hochwertiges Schokoladenprodukt erhalten werden kann, wenn die Masse innerhalb von 5 bis 10 Minuten, insbesondere innerhalb von 7 Minuten, nach Zugabe (bzw. Ende der Zugabe) des Kühlmittels die genannte Endtemperatur erreicht hat.

Durch die Abstimmung des Verfahrens derart, wie viel Kühlmittel wann mit welcher Geschwindigkeit in welcher Form zugegeben wird, können die Endtemperatur, der zeitliche Verlauf der Temperatur bis Erreichen der Endtemperatur, die Endtemperatur sowie die Dauer bis Erreichen der Endtemperatur zielgerichtet eingestellt werden. Die von der Zeit t abhängige Temperatur $T_{Masse}(t)$ der Masse kann dabei insbesondere unter Verwendung der folgenden Energiebilanz-Gleichung erhalten und berücksichtigt werden:

$$M_{Masse} \; c_{Masse} \; dT_{Masse}(t)/dt = P - m_{Kühlmittel} \; dh_S - \alpha \; A \; (T_{Masse}(t) - T_{Behälter}(t))$$

Dabei ist $M_{Masse}$ die Masse der zu kühlenden Masse, $c_{Masse}$ die mittlere spezifische Wärme der Masse (insbesondere in pastöser Form), P die Leistung eines Rührwerks, mit dem das Conchieren erfolgt, $m_{Kühlmittel}$ die Masse des zugegebenen Kühlmittels, dhs die spezifische Sublimationsenergie des Kühlmittels (sofern dieses im festen Zustand vorliegt), $\alpha$ der Wärmeübergangskoeffizient auf den Behälter, in dem das Conchieren erfolgt, A die Oberfläche des Behälters und $T_{Behälter}(t)$ die zeitabhängige Temperatur des Behälters. Insbesondere unter Verwendung dieser Gleichung kann die zuzugebende Masse des Kühlmittels $m_{Kühlmittel}$ anhand der gewünschten Kühlwirkung bzw. anhand des gewünschten $T_{Masse}(t)$ bestimmt werden.

Das Conchieren in Schritt b) kann als ein Batch-Prozess durchgeführt werden.

Unter einem "Batch-Prozess" ist hier zu verstehen, dass das Conchieren gemäß Schritt b) jeweils mit einer wohlbestimmten Menge an Masse (separiert) durchgeführt wird. Diese Menge kann dazu insbesondere zunächst in einen Behälter zum Conchieren eingegeben, darin vollständig conchiert und anschließend aus dem Behälter entnommen werden. Anschließend kann mit einer weiteren wohldefinierten Menge der gesamte Prozess erneut durchgeführt werden. Bei einem "Batch-Prozess" lassen sich das Conchieren besser kontrollieren und damit auch die Produkteigenschaften wie gewünscht bzw. einfacher einstellen. Das Gegenteil zum "Batch-Prozess" ist ein kontinuierliches Conchieren, bei dem zu conchierende Masse kontinuierlich dem (viel größeren) Behälter zum Conchieren an einem Ort zugegeben wird und fertig conchierte Masse gleichzeitig an einem anderen Ort kontinuierlich entnommen wird. Bei einem als "Batch-Prozess" durchgeführten Conchieren kann die gemäß Schritt c) durchgeführte Kühlung mit dem Kühlmittel besonders wirkungsvoll sein.

Als ein weiterer Aspekt wird eine Vorrichtung zur Herstellung eines Kakaoprodukts oder Schokoladenprodukts vorgestellt, die eine Conche mit zumindest einem Behälter umfasst. Der Behälter weist mindestens eine Kühlmitteleingabe auf, über die ein Kühlmittel in den Behälter hinein eingegeben wird.

Der Behälter hat einen Innenraum, in dem die Masse aufgenommen und bearbeitet, insbesondere gerührt, werden kann. Die mindestens eine Kühlmitteleingabe erstreckt sich hin zu dem Innenraum und ermöglicht eine Zugabe des Kühlmittels in den Innenraum, so dass sich das Kühlmittel in dem Innenraum mit der Masse in unmittelbaren Kontakt gebracht werden kann. Gemäß der Erfindung ist die Vorrichtung zur Durchführung des Verfahrens nach einem der Ansprüche 1 bis 10 eingerichtet.

Die Vorrichtung umfasst zumindest eine Conche, insbesondere eine Dreiwellenconche. Weiterhin umfasst die Vorrichtung ein Rührwerk (beispielsweise mit einem Paddelrührer) zum Conchieren der Masse in dem Behälter. Die Kühlmitteleingabe kann beispielsweise eine Leitung umfassen, über die das Kühlmittel in den Behälter geleitet werden kann.

Die Vorrichtung kann so ausgeführt sein, dass die Kühlmitteleingabe mindestens eine Rüttelrinne für ein festes Kühlmittel umfasst. Über die mindestens eine Rüttelrinne kann insbesondere festes Kohlendioxid (beispielsweise in Granulatform) in den Behälter eingegeben werden. Das Kühlmittel kann der Rüttelrinne beispielsweise aus einem Vorratsbehälter zugegeben werden. Es kann eine Förderschnecke vorgesehen sein, über die das Kühlmittel entlang der Rüttelrinne transportiert werden kann.

Die Erfindung und das technische Umfeld werden nachfolgend anhand der Figur näher erläutert. Die Figur zeigt ein besonders bevorzugtes Ausführungsbeispiel, auf das die Erfindung jedoch nicht begrenzt ist. Insbesondere ist darauf hinzuweisen, dass die Figur und insbesondere die dargestellten Größenverhältnisse nur schematisch sind.

Es zeigt:

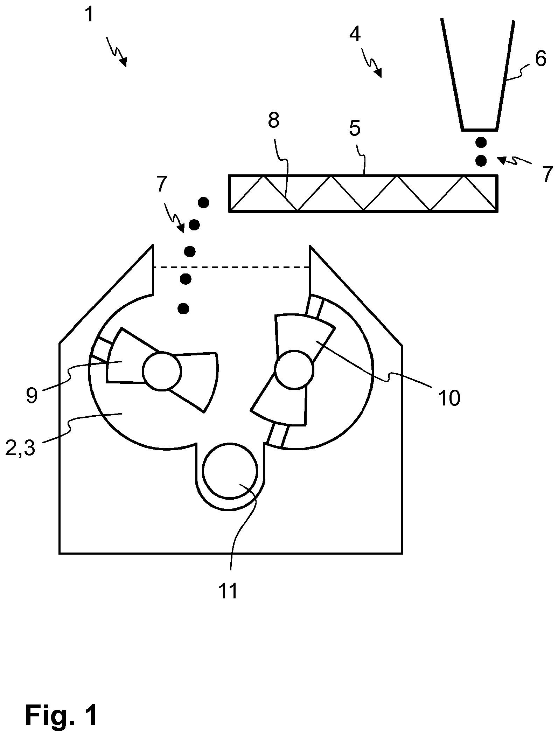

Fig.1:     eine Vorrichtung zur Herstellung eines Kakaoprodukts oder Schokoladenprodukts.

In Fig. 1 ist eine Vorrichtung 1 zur Herstellung eines Kakaoprodukts oder Schokoladenprodukts gezeigt. Die Vorrichtung 1 umfasst einen Behälter 2 zum Conchieren einer Masse 3. In dem Behälter 2 sind ein erstes Rührelement 9, ein zweites Rührelement 10 und ein drittes Rührelement 11 vorgesehen. Der Behälter 2 weist eine Kühlmitteleingabe 4 mit einer Rüttelrinne 5 und einer Förderschnecke 8 auf. Über die Kühlmitteleingabe 4 kann ein Kühlmittel 7, das insbesondere festes Kohlendioxid in Granulatform sein kann, in den Behälter 2 eingegeben werden. Aus einem Vorratsbehälter 6 kann das Kühlmittel 7 der Rüttelrinne 5 zugegeben werden.

Nachdem die Masse 3 bereitgestellt wurde, ist das Kühlmittel 7 während eines Conchierens der Masse 3 zugegeben und dabei mit der Masse 3 vermischt werden kann. Das kann insbesondere zu einer Mehrzahl von Zeitpunkten während des Conchierens und derart erfolgen, dass die Masse 3 auf eine Temperatur im Bereich von 35 °C bis 45 °C [Grad Celsius] abgekühlt wird. Das Conchieren kann insbesondere als ein Batch-Prozess durchgeführt werden.

Durch das Abkühlen mit dem Kühlmittel 7 kann ein Schokoladeprodukt gleicher Qualität in kürzerer Zeit erhalten werden kann.

**Bezugszeichenliste**

1 Vorrichtung
2 Behälter
3 Masse
4 Kühlmitteleingabe
5 Rüttelrinne
6 Vorratsbehälter
7 Kühlmittel
8 Förderschnecke
9 erstes Rührelement
10 zweites Rührelement
11 drittes Rührelement

**Patentansprüche**

**1.** Verfahren zur Herstellung eines Schokoladenprodukts umfassend zumindest die folgenden Verfahrensschritte:

    a) Bereitstellen einer zu conchierenden Masse (3),
    b) Conchieren bereitgestellten Masse (3),
    c) Zugeben eines Kühlmittels (7) zu der Masse (3) während des Conchierens,

**dadurch gekennzeichnet, dass** das Kühlmittel (7) zumindest einen festen Stoff mit einer Temperatur unterhalb von - 50 °C umfasst.

**2.** Verfahren nach Anspruch 1, wobei das Kühlmittel (7) beim Conchieren mit der Masse (3) vermischt wird.

**3.** Verfahren nach einem der vorhergehenden Ansprüche, wobei das Kühlmittel ein verfestigtes Gas ist, das bei Zugabe zu der Masse sublimiert.

**4.** Verfahren nach Anspruch 3, wobei das Kühlmittel (7) zumindest festes Kohlendioxid [$CO_2$] umfasst.

**5.** Verfahren nach Anspruch 4, wobei das feste Kohlendioxid derart zugegeben wird, dass eine Kühlrate von mindestens 1 °C/min eingestellt ist.

**6.** Verfahren nach einem der vorhergehenden Ansprüche, wobei in Schritt c) zu einer Mehrzahl von Zeitpunkten Kühlmittel (7) während des Conchierens gemäß Schritt b) zugegeben wird.

**7.** Verfahren nach einem der vorhergehenden Ansprüche, wobei das Kühlmittel (7) in Schritt c) derart zu der Masse (3) zugegeben wird, dass die Masse (3) auf eine Temperatur im Bereich von 35 °C bis 45 °C abgekühlt wird.

**8.** Verfahren nach Anspruch 7, wobei die Masse (3) während des Conchierens und vor Zugabe des Kühlmittels (7) eine Temperatur von 60 °C bis 80 °C hat.

9.  Verfahren nach einem der vorhergehenden Ansprüche, wobei die Masse (3) innerhalb von 5 bis 10 Minuten nach Zugabe des Kühlmittels die eine Temperatur im Bereich von 42 °C bis 47 °C erreicht hat.

10. Verfahren nach einem der vorhergehenden Ansprüche, wobei das Conchieren in Schritt b) als ein Batch-Prozess durchgeführt wird.

11. Vorrichtung (1) zur Herstellung eines Kakaoprodukts oder Schokoladenprodukts, umfassend eine Conche mit zumindest einem Behälter (2), wobei der Behälter (2) ein Rührwerk zum Conchieren einer Masse (3) in dem Behälter (2) und mindestens eine Kühlmitteleingabe (4) aufweist, über die ein Kühlmittel (7) in den Behälter (2) hinein eingegeben wird, wobei diese eingerichtet zur Durchführung des Verfahrens nach einem der vorhergehenden Ansprüche ist.

12. Vorrichtung (1) nach Anspruch 11, wobei die Kühlmitteleingabe (4) mindestens eine Rüttelrinne (5) für das feste Kühlmittel (7) umfasst.

**Claims**

1.  Method of producing a chocolate product, comprising at least the following method steps:

    a) providing a mass (3) to be conched,
    b) conching the mass (3) provided,
    c) adding a coolant (7) to the mass (7) during conching,

    **characterized in that** the coolant (7) comprises at least one solid substance with a temperature below -50°C.

2.  Method according to Claim 1, wherein the coolant (7) is mixed with the mass (3) during conching.

3.  Method according to either of the preceding claims, wherein the coolant is a solidified gas that sublimes on addition to the mass.

4.  Method according to Claim 3, wherein the coolant (7) comprises at least solid carbon dioxide [$CO_2$].

5.  Method according to Claim 4, wherein the solid carbon dioxide is added in such a way that a cooling rate of at least 1°C/min is established.

6.  Method according to any of the preceding claims, wherein coolant (7) is added during the conching in step b) at a multitude of junctures in step c).

7.  Method according to any of the preceding claims, wherein the coolant (7) is added to the mass (3) in step c) such that the mass (3) is cooled down to a temperature within the range from 35°C to 45°C.

8.  Method according to Claim 7, wherein the mass (3) during the conching and before addition of the coolant (7) is at a temperature of 60°C to 80°C.

9.  Method according to any of the preceding claims, wherein the mass (3) has attained a temperature within the range from 42°C to 47°C within 5 to 10 minutes after addition of the coolant.

10. Method according to any of the preceding claims, wherein the conching in step b) is conducted as a batchwise process.

11. Apparatus (1) for production of a cocoa product or chocolate product, comprising a conche with at least one vessel (2), wherein the vessel (2) has a stirrer system for conching of a mass (3) in the vessel (2) and at least one coolant input (4) via which a coolant (7) is added to the vessel (2), and which is set up for performance of the method according to any of the preceding claims.

12. Apparatus (1) according to Claim 11, wherein the coolant input (4) comprises at least one vibrating channel (5) for the solid coolant (7).

**Revendications**

1. Procédé de fabrication d'un produit de chocolat comprenant au moins les étapes suivantes:

   a) fourniture d'une masse à concher (3),
   b) conchage de la masse fournie (3),
   c) addition d'un agent réfrigérant (7) à la masse (3) pendant le conchage,

   **caractérisé en ce que** l'agent réfrigérant (7) comprend au moins une substance solide à une température inférieure à -50 °C.

2. Procédé selon la revendication 1, dans lequel l'agent réfrigérant (7) est mélangé à la masse (3) pendant le conchage.

3. Procédé selon l'une des revendications précédentes, dans lequel l'agent réfrigérant est un gaz solidifié, qui se sublime lors de son addition à la masse.

4. Procédé selon la revendication 3, dans lequel l'agent réfrigérant (7) comprend au moins du dioxyde de carbone [$CO_2$] solide.

5. Procédé selon la revendication 4, dans lequel le dioxyde de carbone solide est ajouté de façon à ajuster une vitesse de refroidissement d'au moins 1 °C/min.

6. Procédé selon l'une des revendications précédentes, dans lequel, dans l'étape c), on ajoute à plusieurs instants le réfrigérant (7) pendant le conchage selon l'étape b).

7. Procédé selon l'une des revendications précédentes, dans lequel l'agent réfrigérant est dans l'étape c) ajouté à la masse (3) de façon que la masse (3) se refroidisse à une température dans la plage de 35 °C à 45 °C.

8. Procédé selon la revendication 7, dans lequel la masse (3) a, pendant le conchage et avant addition de l'agent réfrigérant (7), une température de 60 °C à 80 °C.

9. Procédé selon la revendication 8, **caractérisé en ce que** la matière plastique excédentaire est extraite par pression par une paire de rouleaux agencés parallèlement à la trajectoire de déplacement de la structure de fils (1) des deux côtés de celle-ci, et **en ce qu'**avant le séchage ultérieur, un courant de soufflage transversal est dirigé sur le produit intermédiaire afin de libérer les trous situés respectivement entre les faisceaux de fils.

10. Procédé selon l'une des revendications précédentes, dans lequel le conchage de l'étape b) est mis en oeuvre sous forme d'un procédé discontinu.

11. Dispositif (1) de fabrication d'un produit de cacao ou d'un produit de chocolat, comprenant une conche ayant au moins un réservoir (2), le réservoir (2) comprenant un agitateur pour le conchage d'une masse (3) dans le réservoir (2) et au moins une entrée (4) pour l'agent réfrigérant, par laquelle un agent réfrigérant (7) est introduit dans le réservoir (2), le dispositif étant conçu pour mettre en oeuvre le procédé selon l'une des revendications précédentes.

12. Dispositif (1) selon la revendication 11, dans lequel l'entrée (4) pour l'agent réfrigérant comprend au moins une rainure vibrante (5) pour l'agent réfrigérant solide (7).

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007202241 A1